# EUROPEAN PATENT SPECIFICATION

(11) **EP 4 592 154 B1**
(45) Date of publication and mention of the grant of the patent: **29.04.2026**
(21) Application number: 25152269.4
(22) Date of filing: 16.01.2025
(51) Int. Cl.: B60W 30/14, B60W 30/095, B60W 50/14

(54) **VEHICLE CONTROL DEVICE, VEHICLE CONTROL METHOD, AND VEHICLE CONTROL PROGRAM**
FAHRZEUGSTEUERUNGSVORRICHTUNG, FAHRZEUGSTEUERUNGSVERFAHREN UND FAHRZEUGSTEUERUNGSPROGRAMM
DISPOSITIF DE COMMANDE DE VÉHICULE, PROCÉDÉ DE COMMANDE DE VÉHICULE ET PROGRAMME DE COMMANDE DE VÉHICULE

(30) Priority: 26.01.2024 JP 2024010256
(43) Date of publication of application: 30.07.2025
(60) Divisional application: 26165881.9
(73) Proprietor: TOYOTA JIDOSHA KABUSHIKI KAISHA, Aichi-ken, 471-8571 (JP)
(72) Inventor: OYA, Kai, TOYOTA-SHI, AICHI-KEN, 471-8571 (JP)
(74) Representative: Cabinet Beau de Loménie

(56) References cited:
- JP-A- H0 539 011
- US-A1- 2015 046 054
- US-A1- 2017 197 506
- US-A1- 2017 341 612

## Description

### FIELD

The present invention relates to a vehicle control device, a vehicle control method, and a vehicle control program.

### BACKGROUND

A travel assistance device is known that executes collision avoidance control by providing braking force to a vehicle in order to avoid a collision between the vehicle and an object, when the object is present ahead in a traveling direction of the vehicle and there is a possibility that the vehicle and the object may collide with each other (such as JP 2018-012360 A).

In the travel assistance device described in JP 2018-012360 A, even in a case where a driver has recognized an object and then travels at a safe speed for the driver when the object is present ahead in a traveling direction of a vehicle, the collision avoidance control such as providing braking force, or the like may be executed. Therefore, in such a case, it is conceivable that the driver stops the collision avoidance control by performing a predetermined operation with an accelerator pedal when the driver decides that the collision avoidance control is unnecessary.

However, when the driver performs the operation with the accelerator pedal in order to stop the collision avoidance control, there is a possibility that the driver may press down the accelerator pedal more than necessary by mistake. When the driver presses down the accelerator pedal more than necessary in such a manner, there is a possibility that the vehicle may be accelerated at acceleration exceeding user's intention and collide with the object present ahead in the traveling direction of the vehicle.

US 2017/341612 Al discloses a further collision avoidance device.

### SUMMARY

In view of the problems described above, an object of the present invention is to reduce a possibility that a vehicle collides with an object located ahead in a traveling direction of the vehicle when a driver presses down an accelerator pedal more than necessary.

According to the present invention, there is provided:
(1) A vehicle control device that controls a speed of a vehicle during traveling, the vehicle control device comprising:
   a deceleration unit that executes deceleration control for decelerating the vehicle when a predetermined deceleration condition is satisfied;
   a speed control unit that executes speed control of the vehicle according to an operation of an accelerator pedal by releasing the deceleration control when a predetermined operation of the accelerator pedal is detected during execution of the deceleration control; and
   a determination unit that determines a possibility that the vehicle and an object collide with each other when the object is detected in front of the vehicle, wherein,
   when a collision possibility between the vehicle and the object is determined to be high, the speed control unit executes the speed control of the vehicle so that acceleration of the vehicle with respect to a press amount of the accelerator pedal is lower as compared to a case where the collision possibility is determined to be low.
(2) The vehicle control device according to above aspect (1), wherein
   the determination unit determines a collision possibility between the vehicle and the object, based on a spacing that may be provided between the vehicle and the object at a time at which the vehicle passes through a side of the object through a possible travel range on a road.
(3) The vehicle control device according to above aspect (2), wherein
   the possible travel range is within a range in a width direction of a lane in which the vehicle travels.
(4) The vehicle control device according to above aspect (2), wherein
   the possible travel range is within a range in a width direction of a road on which the vehicle travels.
(5) The vehicle control device according to any one of above aspects (2) to (4), wherein
   the speed control unit executes the speed control of the vehicle so that acceleration of the vehicle with respect to a press amount of the accelerator pedal is lower as a spacing that may be provided between the vehicle and the object is smaller at a time at which the vehicle passes through a side of the object through a possible travel range on a road.
(6) The vehicle control device according to any one of above aspects (2) to (5), wherein
   the determination unit determines a collision possibility between the vehicle and the object, based on a kind or a situation of the object in addition to a spacing that may be provided between the vehicle and the object at a time at which the vehicle passes through a side of the object through a possible travel range on a road.
(7) The vehicle control device according to any one of above aspects (1) to (6), wherein
   the determination unit determines a collision possibility between the vehicle and the object, based on whether a driver of the vehicle has recognized the object.
(8) The vehicle control device according to any one of above aspects (2) to (6), wherein
   the determination unit determines a collision possibility between the vehicle and the object, based on whether a driver of the vehicle has recognized the object, and, when the driver of the vehicle has not recognized the object, the determination unit determines that the collision possibility between the vehicle and the object is high regardless of a spacing that may be provided between the vehicle and the object at a time at which the vehicle passes through a side of the object through a possible travel range on a road.
(9) The vehicle control device according to above aspects (1) to (8), wherein
   the speed control unit executes the speed control of the vehicle so that the vehicle is accelerated at normal acceleration corresponding to a press amount of the accelerator pedal when a collision possibility between the vehicle and the object is determined to be low, and so that the vehicle is accelerated at acceleration lower than the normal acceleration corresponding to the press amount of the accelerator pedal when the collision possibility between the vehicle and the object is determined to be high.
(10) The vehicle control device according to above aspect (9), further comprising
   a notification unit that provides notification to a driver that the vehicle is accelerated at acceleration lower than the normal acceleration corresponding to the press amount of the accelerator pedal when the vehicle is accelerated at the acceleration.
(11) The vehicle control device according to above aspects (1) to (10), wherein,
   in a case where a collision possibility between the vehicle and the object is determined to be high, when a press amount of the accelerator pedal is equal to or more than a fixed amount, the speed control unit executes the speed control of the vehicle so that acceleration of the vehicle becomes fixed acceleration, regardless of the press amount.
(12) The vehicle control device according to above aspects (1) to (11), wherein
   a predetermined operation of the accelerator pedal for releasing the deceleration control is an operation in which the accelerator pedal is pressed down by equal to or more than a predetermined amount after execution of the deceleration control starts, or an operation in which the accelerator pedal is pressed down at a press speed equal to or more than a predetermined speed.
(13) The vehicle control device according to above aspects (1) to (12), wherein,
   when normal control that is not after the deceleration control is released is executed, the speed control unit executes the speed control of the vehicle so as to become the same acceleration with respect to a press amount of the accelerator pedal, regardless of a collision possibility between the vehicle and the object.
(14) A vehicle control method for controlling a speed of a vehicle during traveling, the vehicle control method comprising:
   executing deceleration control for decelerating the vehicle when a predetermined deceleration condition is satisfied;
   executing speed control of the vehicle according to an operation of an accelerator pedal by releasing the deceleration control when a predetermined operation of the accelerator pedal is detected during execution of the deceleration control; and
   determining a possibility that the vehicle and an object collide with each other when the object is detected in front of the vehicle, wherein,
   when a collision possibility between the vehicle and the object is determined to be high, the speed control of the vehicle is executed so that acceleration of the vehicle with respect to a press amount of the accelerator pedal is lower as compared to a case where the collision possibility is determined to be low.
(15) A vehicle control program that controls a speed of a vehicle during traveling, the vehicle control program causing a computer to execute:
   executing deceleration control for decelerating the vehicle when a predetermined deceleration condition is satisfied;
   executing speed control of the vehicle according to an operation of an accelerator pedal by releasing the deceleration control when a predetermined operation of the accelerator pedal is detected during execution of the deceleration control; and
   determining a possibility that the vehicle and an object collide with each other when the object is detected in front of the vehicle, wherein,
   when a collision possibility between the vehicle and the object is determined to be high, the speed control of the vehicle is executed so that acceleration of the vehicle with respect to a press amount of the accelerator pedal is lower as compared to a case where the collision possibility is determined to be low.

### BRIEF DESCRIPTION OF DRAWINGS

FIG. 1 is a schematic block diagram illustrating a configuration of a vehicle control system.
FIG. 2 is a schematic side view partially illustrating an inside of a vehicle in which the vehicle control system is installed.
FIG. 3 is a functional block diagram of a processor of an ECU.
FIG. 4 is a diagram schematically illustrating a scene where the vehicle travels.
FIG. 5 is a diagram schematically illustrating a scene where the vehicle travels.
FIG. 6 is a diagram schematically illustrating a scene where the vehicle travels.
FIG. 7 is a diagram schematically illustrating a scene where the vehicle travels.
FIG. 8 is a diagram illustrating a relationship between a press amount of an accelerator pedal and target acceleration of the vehicle.
FIG. 9 is a flowchart illustrating a flow of decision processing of deciding whether to execute object approaching processing.
FIG. 10 is a flowchart illustrating a flow of the object approaching processing.
FIG. 11 is a diagram similar to FIG. 8, illustrating a relationship between the press amount of the accelerator pedal and the target acceleration of the vehicle.
FIG. 12 is a diagram illustrating a relationship between a passage spacing and the target acceleration of the vehicle when the press amount of the accelerator pedal is fixed.
FIG. 13 is a flowchart similar to FIG. 10, illustrating a flow of the object approaching processing.

### DESCRIPTION OF EMBODIMENTS

Hereinafter, embodiments will be described in detail with reference to the drawings. It should be noted that, in the following description, the same reference sign is provided to a similar component.

### <Configuration of Vehicle Control System>

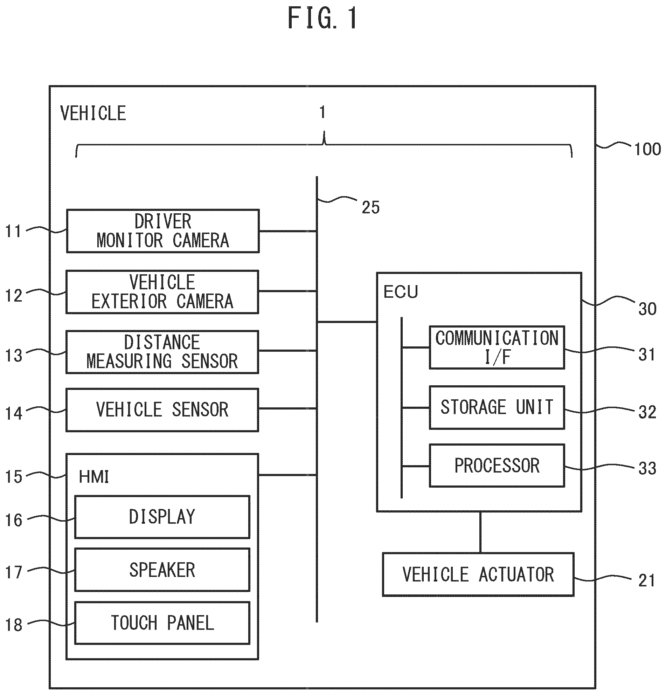

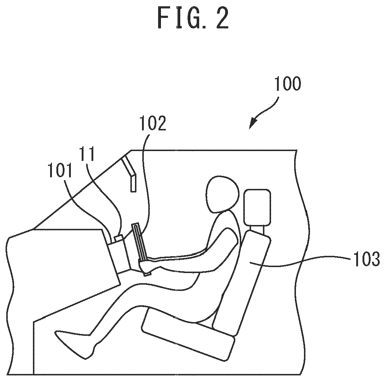

A configuration of a vehicle control system 1 including a vehicle control device according to one embodiment will be described with reference to FIGS. 1 to 3. The vehicle control device controls a speed of a vehicle (host vehicle) during traveling. FIG. 1 is a schematic block diagram illustrating the configuration of the vehicle control system 1. FIG. 2 is a schematic side view partially illustrating an inside of a vehicle 100 in which the vehicle control system 1 is installed.

The vehicle control system 1 is installed in the vehicle 100, and controls a speed of the vehicle during traveling. As illustrated in FIG. 2, the vehicle 100 includes a steering wheel 102 attached via a steering column 101, and a driver seat 103 on which a driver sits.

As illustrated in FIG. 1, in the present embodiment, the vehicle control system 1 includes a driver monitor camera 11, a vehicle exterior camera 12, a distance measuring sensor 13, a vehicle sensor 14, a human machine interface (HMI) 15, a vehicle actuator 21, and an electronic control unit (hereinafter referred to as an "ECU") 30. The driver monitor camera 11, the vehicle exterior camera 12, the distance measuring sensor 13, the vehicle sensor 14, the HMI 15, and the ECU 30 are communicably connected to one another via, for example, an in-vehicle network 25. The in-vehicle network 25 is, for example, a network conforming to standards of a controller area network (CAN) or the like. Further, the ECU 30 is connected to the vehicle actuator 21 via a signal line.

The driver monitor camera 11 is an apparatus that captures an image of a face of a driver. In the present embodiment, the driver monitor camera 11 is provided on an upper portion of the steering column 101, and is disposed to face a driver so as to be able to capture an image of the driver, specifically, an image of a face of the driver and a part of an upper body. It should be noted that the driver monitor camera 11 may be provided in a position different from the upper portion of the steering column 101 as long as the driver monitor camera 11 can capture an image of a driver of the vehicle 100. For example, the driver monitor camera 11 may be provided on the steering wheel 102, a room mirror, a meter panel, a meter hood, or the like of the vehicle 100.

The driver monitor camera 11 includes a camera and a floodlight. For example, the camera is a complementary metal-oxide semiconductor (CMOS) camera or a charge coupled device (CCD) camera, and the floodlight is a light-emitting diode (LED). Further, the floodlight is preferably a near infrared LED so as to be able to capture an image of a face of a driver without giving displeasure to the driver even in low illumination such as nighttime, and the camera is also preferably able to detect near infrared radiation. For example, the floodlight includes two near infrared LEDs disposed on both sides of the camera. Further, the camera may be provided with a filter such as a visible light cut-off filter. The driver monitor camera 11 outputs an image captured in each predetermined cycle to the ECU 30 via the in-vehicle network 25.

The vehicle exterior camera 12 is an apparatus that captures surroundings of the vehicle. In the present embodiment, the vehicle exterior camera 12 captures an image of the front direction of the vehicle 100. The vehicle exterior camera 12 is, for example, a CMOS camera or a CCD camera having sensitivity to visible light. In the present embodiment, the vehicle exterior camera 12 is attached to, for example, the inside of the vehicle 100 so as to face the front of the vehicle 100. The vehicle exterior camera 12 captures an image of a front region of the vehicle 100 in each predetermined capturing cycle, and generates an image in which the front region is captured. Every time the vehicle exterior camera 12 generates an image, the vehicle exterior camera 12 outputs the generated image to the ECU 30 via the in-vehicle network 25. It should be noted that the vehicle exterior camera 12 may be a monocular camera, or may be a stereo camera. When a stereo camera is used as the vehicle exterior camera 12, the vehicle exterior camera 12 also functions as the distance measuring sensor 13. The vehicle 100 may be provided with a plurality of vehicle exterior cameras having different capturing directions or different focal distances.

The distance measuring sensor 13 is a sensor that measures a distance to an object present around the vehicle 100. In particular, in the present embodiment, the distance measuring sensor 13 measures a distance to an object present in front of the vehicle 100. In the present embodiment, the distance measuring sensor 13 can also measure an azimuth of an object present around the vehicle 100. The distance measuring sensor 13 is, for example, a radar such as a millimeter wave radar, or an LIDAR. Furthermore, the distance measuring sensor 13 may be configured to be able to measure a relative speed of an object present around the vehicle 100. In the present embodiment, the distance measuring sensor 13 measures a distance to an object present in front of the vehicle. The distance measuring sensor 13 outputs a measurement result of a distance to a surrounding object in each predetermined cycle to the ECU 30 via the in-vehicle network 25.

The vehicle sensor 14 is a sensor that detects a state of the vehicle 100. The vehicle sensor 14 detects a traveling state and an operation state of the vehicle 100. For example, as a sensor that detects a traveling state of the vehicle 100, the vehicle sensor 14 includes a speed sensor that detects a speed of the vehicle 100, an acceleration sensor that detects acceleration of the vehicle 100, a yaw rate sensor that detects a change speed of a yaw angle (yaw rate) during turning of the vehicle 100, or the like. For example, as a sensor that detects an operation state of the vehicle 100, the vehicle sensor 14 includes an accelerator sensor that detects a press amount of an accelerator pedal (not illustrated) by a driver, a brake sensor that detects a press amount of a brake pedal by a driver, a steering angle sensor that detects a steering angle of the steering wheel 102, or the like. The vehicle sensor 14 outputs a detection result in each predetermined cycle to the ECU 30 via the in-vehicle network 25.

The HMI 15 is an interface for inputting and outputting information between a driver or a passenger and the vehicle control system 1. The HMI 15 includes an information provision device for providing various types of information to a driver or a passenger, and an input device for a driver or a passenger to perform an input operation.

Specifically, the HMI 15 includes, as the information provision device, a display 16 for displaying character information or image information. The display 16 is one example of a display device that displays an image. The display 16 is a display apparatus in any system such as a liquid crystal display or an organic EL display. The display 16 is disposed so that at least a driver can check a screen of the display 16. Therefore, the display 16 is disposed on, for example, an instrument panel, a meter panel, or the like of the vehicle 100. The display 16 receives an image signal from the ECU 30 via the in-vehicle network 25, and displays an image according to the image signal. It should be noted that the vehicle 100 may include, as the information provision device, a display apparatus in another system such as a head-up display instead of or in addition to the display 16.

Further, the HMI 15 includes a speaker 17 as the information provision device. The speaker 17 is one example of an apparatus that outputs a sound. The speaker 17 receives a sound signal from the ECU 30 via the in-vehicle network 25, and outputs a sound according to the sound signal. It should be noted that the HMI 15 may include an apparatus that provides various types of information to a driver or a passenger other than the display 16 and the speaker 17 (for example, a vibration device or the like).

In addition, the HMI 15 includes a touch panel 18 as an input device. The touch panel 18 is one example of an apparatus on which an input is performed by a touch of a driver or a passenger. The touch panel 18 outputs an output signal to the ECU 30 via the in-vehicle network 25 when an operation by a touch of a driver or a passenger is performed. It should be noted that the HMI 15 may include, as the input device, an apparatus for a driver or a passenger to perform an input operation other than the touch panel 18 (for example, a button, a switch, or the like).

The vehicle actuator 21 is an actuator used for controlling driving of the vehicle 100. Specifically, the vehicle actuator 21 includes, for example, a driving actuator that controls an internal combustion engine or an electric motor for driving the vehicle 100, a braking actuator that controls a brake for braking the vehicle 100, and a steering actuator that controls steering of the vehicle 100. The vehicle actuator 21 controls acceleration, braking, and steering of the vehicle 100 according to a control signal transmitted from the ECU 30 via a signal line.

### <Configuration of Vehicle Control Device>

The ECU 30 functions as a vehicle control device that controls a speed of the vehicle during traveling. Therefore, the ECU 30 controls activation of the vehicle actuator 21. Further, the ECU 30 controls information that needs to be provided from the information provision device of the HMI 15. Therefore, the ECU 30 controls an image displayed on the display 16 and a sound output from the speaker 17. As illustrated in FIG. 1, the ECU 30 includes a communication interface 31, a storage unit 32, and a processor 33.

The communication interface 31 is a circuit for connecting the ECU 30 to the in-vehicle network 25.

The storage unit 32 stores data. The storage unit 32 includes, for example, at least any one of a volatile semiconductor memory, a non-volatile semiconductor memory, a hard disk drive (HDD), and a solid state drive (SSD). The storage unit 32 stores a computer program executed by the processor 33 of the ECU 30. The storage unit 32 stores data used in a computer program executed by the processor 33, such as data transmitted from the driver monitor camera 11 or the like.

The processor 33 includes one or a plurality of central processing units (CPUs) and peripheral circuits thereof. The processor 33 may further include another arithmetic circuit such as a logical arithmetic unit or a numerical arithmetic unit. The processor 33 executes a computer program stored in the storage unit 32.

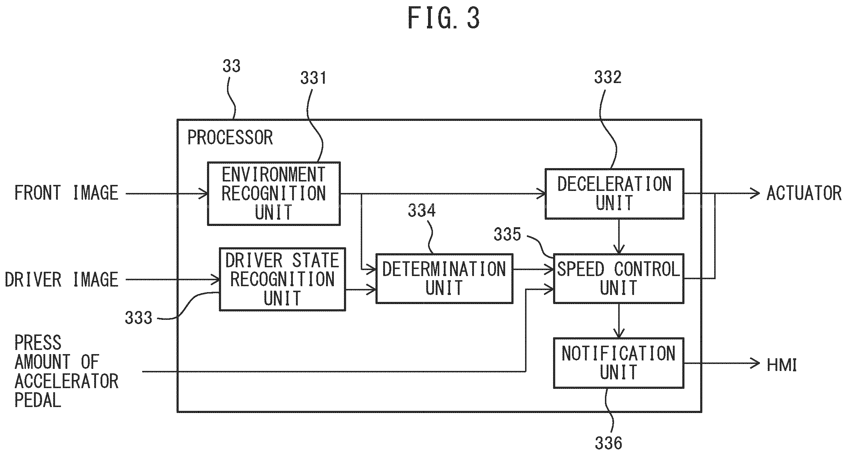

FIG. 3 is a functional block diagram of the processor 33 of the ECU 30. As illustrated in FIG. 3, the processor 33 includes an environment recognition unit 331, a deceleration unit 332, a driver state recognition unit 333, a determination unit 334, a speed control unit 335, and a notification unit 336.

The environment recognition unit 331 recognizes an environment in front of the vehicle 100, based on an output of the vehicle exterior camera 12 and an output of the distance measuring sensor 13. In particular, in the present embodiment, the environment recognition unit 331 recognizes an object located in front of the vehicle 100, and also estimates a relative position of the object with respect to the vehicle 100. In addition, the environment recognition unit 331 recognizes a road on which the vehicle 100 travels and a pavement marking (for example, a road line or the like). The environment recognition unit 331 outputs, to the deceleration unit 332 and the determination unit 334, information relating to a recognized environment, i.e., information relating to an object and a pavement marking or the like.

In particular, in the present embodiment, the environment recognition unit 331 recognizes a kind of an object (such as a pedestrian, a bicycle, a motorcycle, and an automobile) located in front of the vehicle 100, and also estimates a relative position (relative distance) of the object with respect to the vehicle 100. In addition, the environment recognition unit 331 may estimate a relative speed of the object with respect to the vehicle 100. A relative speed of the object with respect to the vehicle 100 is estimated based on an output of the distance measuring sensor 13 when a relative speed of a surrounding object is detected by the distance measuring sensor 13. On the other hand, a relative speed of the object with respect to the vehicle 100 is estimated based on a time-series relative position of the object with respect to the vehicle 100 when a relative speed of a surrounding object is not detected by the distance measuring sensor 13. The environment recognition unit 331 outputs, as information relating to the object located in front of the vehicle 100, a kind of the object located in front of the vehicle 100, a relative position of the object, a relative speed of the object, or the like.

For example, when an LIDAR is used as the distance measuring sensor 13, the environment recognition unit 331 forms a group of pieces of point group data output from the LIDAR for each piece of the data having an equal distance, and also forms a group for each group representing a target by putting related groups together. Further, the environment recognition unit 331 recognizes an object represented in an image, by recognition processing of an image captured by the vehicle exterior camera 12. In particular, at this time, the environment recognition unit 331 also recognizes a kind of the object represented in the image, by the recognition processing. Then, the environment recognition unit 331 estimates a relative position of the object with respect to the vehicle 100, based on a target group located in a position associated with a position in the image of the object recognized by the recognition processing. In particular, the environment recognition unit 331 estimates a center position of the target group as a center position of the object. In addition, the environment recognition unit 331 estimates a relative speed of the object with respect to the vehicle 100, based on a change in a time-series relative position of each object with respect to the vehicle 100.

It should be noted that a relative position of an object with respect to the vehicle 100 may be estimated by a different method by using the vehicle exterior camera 12 and the distance measuring sensor 13. Further, a relative position of an object with respect to the vehicle 100 may be estimated based on only an output of the vehicle exterior camera 12, only an output of the distance measuring sensor 13, or an output of a sensor different from the vehicle exterior camera 12 and the distance measuring sensor 13.

The deceleration unit 332 executes deceleration control for decelerating the vehicle 100 when a predetermined deceleration condition is satisfied. In particular, in the deceleration control by the deceleration unit 332, even when a braking operation such as a press on a brake pedal is not performed by a driver, the vehicle 100 is decelerated. In the deceleration control by the deceleration unit 332, even when a braking operation is performed by a driver, the vehicle 100 may be decelerated by braking force more than braking force associated with the braking operation.

In the present embodiment, the deceleration unit 332 determines whether a deceleration condition is satisfied, based on information relating to an object located in front of the vehicle 100, which is input from the environment recognition unit 331, or the like. The deceleration condition is satisfied when, for example, an object other than a preceding vehicle (for example, a pedestrian or the like) is detected within a predetermined first reference distance in front of the vehicle 100 in a lane in which the vehicle 100 travels. At this time, the reference distance may be changed according to a kind of the detected object. For example, when the detected object is a pedestrian, the reference distance is set longer as compared to a case where the detected object is a bicycle.

The deceleration condition may also by satisfied when, for example, an object other than a preceding vehicle is detected within a predetermined second reference distance in front of the vehicle 100 in a lane adjacent to a lane in which the vehicle 100 travels or in a sidewalk adjacent to a lane in which the vehicle 100 travels. In this case, a kind of an object in which the deceleration condition is satisfied may be limited as compared to a case where an object is detected in a lane in which the vehicle 100 travels (for example, the deceleration condition is satisfied when a pedestrian is detected in an adjacent lane or an adjacent sidewalk, but the deceleration condition is not satisfied when a bicycle is detected in an adjacent lane or an adjacent sidewalk, or the like). For example, the second reference distance may be set to a distance shorter than the first reference distance.

It should be noted that the deceleration condition may be a condition different from the above-described condition as long as the deceleration condition is a condition that is satisfied in any case where an object other than a preceding vehicle is present in front of the vehicle 100.

Then, when the deceleration condition as described above is satisfied, the deceleration unit 332 transmits a control signal to the vehicle actuator 21 in order to decelerate a speed of the vehicle 100 to a predetermined reduction reference speed. Specifically, the deceleration unit 332 controls the vehicle actuator 21 so that a speed of the vehicle 100 is decelerated to the predetermined reduction reference speed. For example, the deceleration unit 332 controls a driving actuator so that an engine brake is applied in an internal combustion engine or a regeneration brake is applied in an electric motor. Alternatively, the deceleration unit 332 controls a braking actuator so as to brake the vehicle 100 by a brake. The reduction reference speed may be a predetermined fixed speed, or may be a speed that changes based on, for example, a distance to an object located in front of the vehicle 100, or the like. In this case, for example, the reduction reference speed is set to a slower speed as the distance to the object is shorter. The deceleration unit 332 outputs information relating to execution of the deceleration control (for example, information relating to whether the deceleration control is currently being executed) to the speed control unit 335.

The driver state recognition unit 333 recognizes a state of a driver, based on an output of the driver monitor camera 11. In the present embodiment, the driver state recognition unit 333 detects a degree of open eyes and a line-of-sight direction of a driver. However, the driver state recognition unit 333 may detect another parameter that can be used for deciding whether a driver has recognized an object in front of the vehicle 100. The driver state recognition unit 333 outputs, to the determination unit 334, information relating to a state of a driver (for example, information relating to a degree of open eyes and a line-of-sight direction), which has been detected by the driver state recognition unit 333.

The driver state recognition unit 333 inputs, for example, an image acquired from the driver monitor camera 11 to an identifier that identifies an upper eyelid and a lower eyelid, and detects a distance between the recognized upper eyelid and lower eyelid as a degree of open eyes. Further, the driver state recognition unit 333 inputs, for example, an image acquired from the driver monitor camera 11 to an identifier that has been trained in advance so as to specify positions of a pupil and corneal reflection of a light source. Then, the driver state recognition unit 333 detects a line-of-sight direction, based on a relationship between the specified positions of the pupil and the corneal reflection. As such an identifier, for example, a convolutional neural network (CNN) that outputs positions of a pupil and corneal reflection when a face image is input is used. However, the driver state recognition unit 333 may detect a degree of open eyes of a driver and a line-of-sight direction of the driver by any method different from the above-described method.

The determination unit 334 determines, based on information relating to an object, a lane, or the like which has been input from the environment recognition unit 331 and information relating to a state of a driver which has been input from the driver state recognition unit 333, a possibility of a collision between the vehicle 100 and an object when the object is detected in front of the vehicle 100. In particular, in the present embodiment, the determination unit 334 determines a possibility of a collision between the vehicle 100 and an object when the object is located ahead in a lane in which the vehicle 100 travels and a driver of the vehicle 100 even takes some sort of avoidance action. In addition, in the present embodiment, the determination unit 334 determines a possibility of a collision between the vehicle 100 and an object due to a driver of the vehicle 100 not taking the avoidance action.

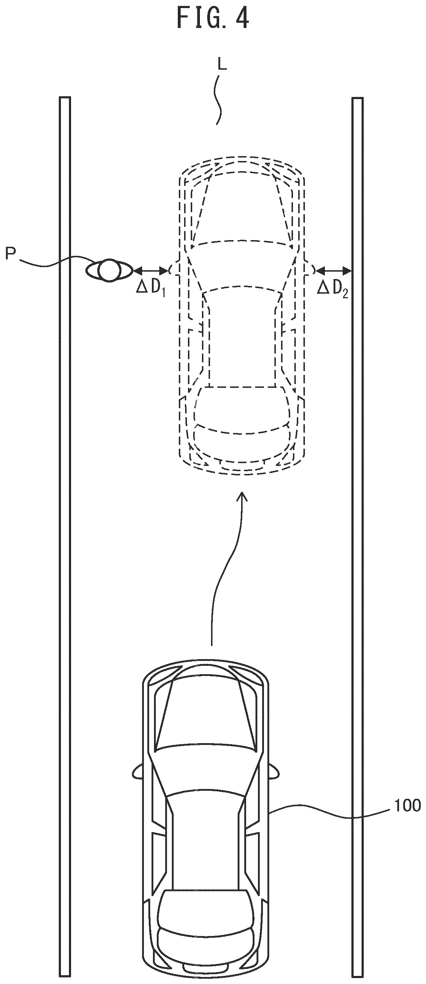

First, determination of a possibility of a collision between the vehicle 100 and an object even when a driver of the vehicle 100 takes some sort of the avoidance action will be described with reference to FIGS. 4 to 7. In the present embodiment, when an object is present in front of the vehicle 100, in particular when an object is present in front of the vehicle 100 in a lane in which the vehicle 100 travels, a collision possibility is determined based on whether the vehicle 100 can travel within a possible travel range while the vehicle 100 avoids the object. Specifically, the collision possibility between the vehicle 100 and an object is determined based on a spacing (hereinafter also referred to as a "passage spacing") that may be provided between the vehicle 100 and the object and between the vehicle 100 and an end of the possible travel range when the vehicle 100 passes at a side of the object through the possible travel range on a road. In particular, in the present embodiment, when the passage spacing is equal to or more than a preset reference spacing, the collision possibility between the vehicle 100 and the object is determined to be low. Conversely, when the passage spacing is less than the preset reference spacing, the collision possibility between the vehicle 100 and the object is determined to be high. It should be noted that the reference spacing is a spacing in which the vehicle 100 can relatively safely pass through a side of an object when the spacing is located between the vehicle 100 and the object or the like.

FIGS. 4 to 7 are diagrams schematically illustrating a scene where the vehicle 100 travels. A vehicle indicated by a solid line in the diagrams indicates a current position of the vehicle 100, and a vehicle indicated by a broken line in the diagrams indicates a future position of the vehicle 100.

The example illustrated in FIG. 4 illustrates a case where a pedestrian P (object) is present on a left side in front of the vehicle 100 in a lane L in which the vehicle 100 travels. In particular, in the example illustrated in FIG. 4, the pedestrian P is located in a position where the vehicle 100 will collide with the pedestrian P when the vehicle 100 keeps traveling in a straight line. In such a case, it is conceivable that the vehicle 100 takes the avoidance action for avoiding the pedestrian P within a range in a width direction of the lane L, which is the possible travel range of the vehicle 100. When such avoidance action is taken, the vehicle 100 travels to a position indicated by the broken line in FIG. 4 when the vehicle 100 passes through the side of the pedestrian P. In the example illustrated in FIG. 4, when the vehicle 100 passes through the side of the pedestrian P, sufficient spacings ΔD₁ and ΔD₂ each equal to or more than the reference spacing can be provided between the vehicle 100 and the pedestrian P and between the vehicle 100 and an end of the lane L (end of the possible travel range). In such a case, the vehicle 100 can pass through the side of the pedestrian P with enough space, and thus the collision possibility between the vehicle 100 and the pedestrian P is determined to be low.

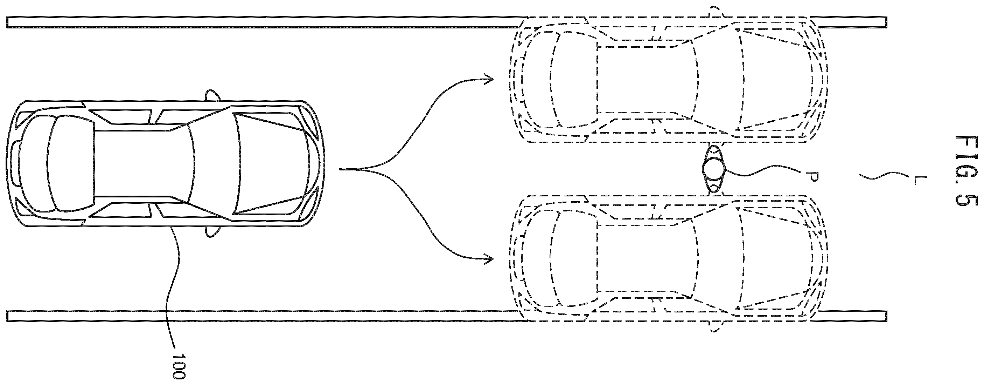

The example illustrated in FIG. 5 illustrates a case where the pedestrian P is present at the center in front of the vehicle 100 in the lane L in which the vehicle 100 travels. In such a case, it is conceivable that the vehicle 100 takes the avoidance action for avoiding the pedestrian P to a left side or a right side of the pedestrian P. However, even when such avoidance action is taken, as indicated by the broken line in FIG. 5, the vehicle 100 collides with the pedestrian P when the vehicle 100 passes through the side of the pedestrian P. Therefore, in such a case, the vehicle 100 cannot pass through the side of the pedestrian P with enough space, and thus the collision possibility between the vehicle 100 and the pedestrian P is determined to be high.

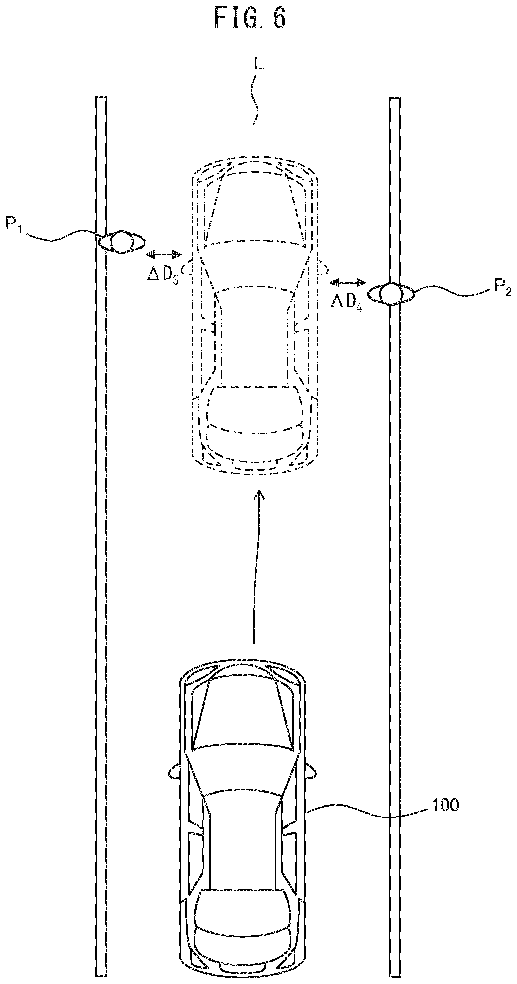

The example illustrated in FIG. 6 illustrates a case where pedestrians P₁ and P₂ (objects) are present on both left and right sides in front of the vehicle 100 in the lane L in which the vehicle 100 travels. In this case, it is conceivable that the vehicle 100 takes the avoidance action for avoiding the pedestrians P₁ and P₂ by passing through the center of the lane L. In a case where such avoidance action is taken, sufficient spacings ΔD₃ and ΔD₄ equal to or more than the reference spacing can be provided between the vehicle 100 and the pedestrian P₁ and between the vehicle 100 and the pedestrian P₂ when the vehicle 100 passes through the side of the pedestrians P₁ and P₂. In such a case, the vehicle 100 can pass through the side of the pedestrian P with enough space, and thus the collision possibility between the vehicle 100 and the pedestrian P is determined to be low.

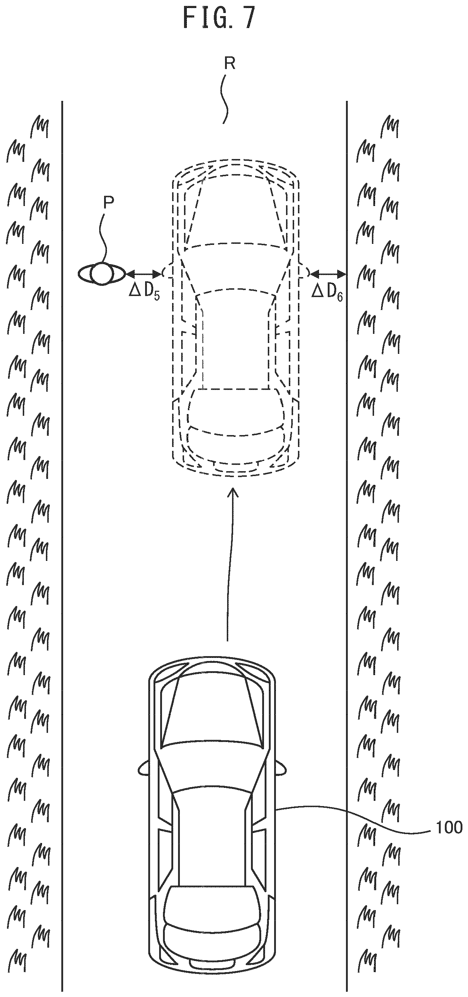

The example illustrated in FIG. 7 illustrates a case where the pedestrian P (object) is present on a left side in front of the vehicle 100 within a range in a width direction of a road R (for example, a paved range in the width direction) when the vehicle 100 travels on the road R without a road line. In this case, the possible travel range of the vehicle 100 is set within the range in the width direction of the road. In the example illustrated in FIG. 7, when the vehicle 100 passes through the side of the pedestrian P, sufficient spacings ΔD₅ and ΔD₆ each equal to or more than the reference spacing can be provided between the vehicle 100 and the pedestrian P and between the vehicle 100 and an end of the road R (end of the possible travel range). In such a case, the vehicle 100 can pass through the side of the pedestrian P with enough space, and thus the collision possibility between the vehicle 100 and the pedestrian P is determined to be low.

In the present embodiment, a collision possibility between the vehicle 100 and an object is determined based on a spacing (passage spacing) that may be provided between the vehicle 100 and the object and between the vehicle 100 and an end of a possible travel range when the vehicle 100 passes through a side of the object through the possible travel range on a road. In this way, the collision possibility between the vehicle 100 and an object can be relatively accurately estimated.

It should be noted that, in the examples illustrated in FIGS. 4 to 7, the possible travel range of the vehicle 100 is set within the range in the width direction of the lane in which the vehicle 100 travels or within the range in the width direction of the road on which the vehicle travels. However, the possible travel range may be set to a range between an end (for example, a right end) on one side in the width direction of the lane in which the vehicle 100 travels and an end (for example, a left end) on an opposite side in the width direction of the road on which the vehicle 100 travels.

A collision possibility between the vehicle 100 and an object in front of the vehicle may be determined based on a kind or a situation of the object in addition to a passage spacing. Specifically, for example, the reference spacing for deciding a collision possibility between the vehicle 100 and an object may be set based on a kind or a situation of the object. In this case, for example, when a kind of the object is a movable object such as a pedestrian and a bicycle, the reference spacing may be set longer as compared to a case of an immovable object such as a road cone. Further, when a movable object is moving, the reference spacing may be set longer as compared to a case where the movable object is at rest. By changing the reference spacing, based on a kind or a situation of an object, in such a manner, the collision possibility between the vehicle 100 and the object in front of the vehicle can be more appropriately estimated.

Next, determination of a possibility of a collision between the vehicle 100 and an object due to a driver of the vehicle 100 not taking the avoidance action will be described. In the present embodiment, when an object is present in front of the vehicle 100, in particular when an object is present in front of the vehicle 100 in a lane in which the vehicle 100 travels, the determination unit 334 determines a collision possibility, based on whether a driver has recognized the object. In particular, in the present embodiment, when a driver has not recognized an object, the determination unit 334 determines that the collision possibility between the vehicle 100 and the object is high, regardless of a passage spacing. On the other hand, when a driver has recognized an object, the determination unit 334 determines the collision possibility between the vehicle 100 and the object, based on a passage spacing.

In the present embodiment, the determination unit 334 determines whether a driver has recognized an object, based on information relating to a state of the driver, which is input from the driver state recognition unit 333. For example, when a degree of open eyes of a driver is lower than a reference degree of open eyes and thus the driver is closing eyes, the determination unit 334 determines that the driver has not recognized an object. When a degree of open eyes of a driver is equal to or more than the reference degree of open eyes, the determination unit 334 determines whether the driver has recognized an object, based on a line-of-sight direction of the driver. When the line-of-sight direction of the driver is toward the front of the vehicle 100 and is a direction in which the object is present, the determination unit 334 determines that the driver has recognized the object. On the other hand, when the line-of-sight direction of the driver is not toward the front of the vehicle 100 or is not a direction in which the object is present, the determination unit 334 determines that the driver has not recognized the object.

The determination unit 334 inputs, to the speed control unit 335, a determination result of a collision possibility between the vehicle 100 and an object located in front of the vehicle 100 which has been obtained in the above manner. In particular, in the present embodiment, the determination unit 334 outputs a determination result of a collision possibility between the vehicle 100 and an object in two levels, i.e., a determination result that the collision possibility is high and a determination result that the collision possibility is low. Specifically, when a driver has not recognized an object, and when a driver has recognized an object but a passage spacing is less than the reference spacing, the determination unit 334 outputs a determination result that the collision possibility is high. On the other hand, when a driver has recognized an object and a passage spacing is equal to or more than the reference spacing, the determination unit 334 outputs a determination result that the collision possibility is low.

In such a manner, in the present embodiment, a collision possibility between the vehicle 100 and an object is determined based on whether a driver of the vehicle 100 has recognized the object in front of the vehicle. When a driver has not recognized an object, there is a possibility that the vehicle 100 and the object collide with each other even if passage spacing is sufficient, and thus a collision possibility between the vehicle 100 and the object can be appropriately estimated in the present embodiment.

It should be noted that, in the present embodiment, a collision possibility between the vehicle 100 and an object is determined based on a passage spacing, and a degree of open eyes and a line-of-sight direction of a driver. However, the collision possibility between the vehicle 100 and the object may be determined based on the other parameters.

The speed control unit 335 executes speed control of the vehicle 100 when the deceleration control by the deceleration unit 332 is not executed. In the present embodiment, when a predetermined operation of an accelerator pedal by a driver is detected during execution of the deceleration control by the deceleration unit 332, the speed control unit 335 releases the deceleration control, and executes the speed control of the vehicle 100 according to an operation of the accelerator pedal. The speed control unit 335 receives an input of information relating to execution of the deceleration control from the deceleration unit 332, an input of a determination result of a collision possibility between the vehicle 100 and an object from the determination unit 334, and an input of a press amount of the accelerator pedal from the vehicle sensor 14.

In the present embodiment, the predetermined operation of the accelerator pedal for releasing the deceleration control (the operation is also referred to as an "accelerator override") is an operation in which the accelerator pedal is pressed down by equal to or more than a predetermined amount after execution of the deceleration control starts, or an operation in which the accelerator pedal is pressed down at a press speed equal to or more than a predetermined speed. Therefore, in the present embodiment, the deceleration unit 332 releases the deceleration control when the accelerator pedal is pressed down by equal to or more than a predetermined reference press amount during execution of the deceleration control. In this case, when the accelerator pedal has been pressed down since before execution of the deceleration control starts, the deceleration control is released at a time at which the accelerator pedal is additionally pressed down by equal to or more than the reference press amount further from a press amount of the accelerator pedal immediately after execution of the deceleration control starts. Alternatively, the deceleration unit 332 releases the deceleration control when the accelerator pedal is pressed down at a speed equal to or more than a predetermined reference press speed during execution of the deceleration control. It should be noted that release of the deceleration control may be performed by an operation other than the above-described operations of the accelerator pedal.

The speed control unit 335 executes the speed control of the vehicle 100 according to an operation of the accelerator pedal when the deceleration control is released. In particular, in the present embodiment, when the determination unit 334 determines that a collision possibility between the vehicle 100 and an object is high, the speed control unit 335 executes the speed control of the vehicle 100 so that acceleration of the vehicle 100 with respect to a press amount of the accelerator pedal is lower as compared to a case where the collision possibility is determined to be low. In addition, the speed control unit 335 outputs, to the notification unit 336, information relating to the speed control of the vehicle 100 (in particular, information relating to whether the speed control is executed so that acceleration of the vehicle 100 with respect to a press amount of the accelerator pedal is lower). In addition, the speed control unit 335 may output information relating to the deceleration control (in particular, information relating to whether the deceleration control is released) to the notification unit 336.

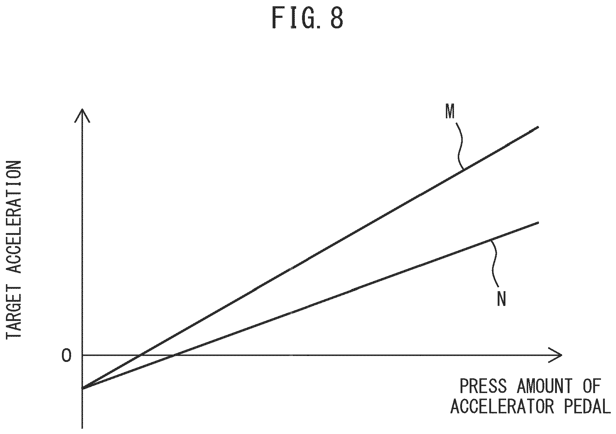

FIG. 8 is a diagram illustrating a relationship between a press amount of the accelerator pedal and target acceleration of the vehicle 100. M in FIG. 8 indicates a relationship when the determination unit 334 determines that a collision possibility is low, and N in FIG. 8 indicates a relationship when the determination unit 334 determines that the collision possibility is high. As illustrated in FIG. 8, the target acceleration is set higher as the press amount of the accelerator pedal increases, regardless of the collision possibility. Further, as illustrated in FIG. 8, when the collision possibility is determined to be high (N in FIG. 8), the target acceleration is set lower as compared to a case where the collision possibility is determined to be low (M in FIG. 8). Then, the speed control unit 335 controls the vehicle actuator 21 so that acceleration of the vehicle 100 reaches the target acceleration which has been set in the above manner.

In particular, in the present embodiment, a relationship between the press amount of the accelerator pedal and the target acceleration when the determination unit 334 determines that the collision possibility is low (M in FIG. 8) is set to a relationship similar to a relationship when normal control, that is not after the deceleration control is released, is executed. Therefore, when the determination unit 334 determines that a collision possibility between the vehicle 100 and an object is low, the speed control unit 335 executes the speed control of the vehicle 100 so that the vehicle 100 is accelerated at normal acceleration corresponding to a press amount of the accelerator pedal. In addition, when the determination unit 334 determines that a collision possibility between the vehicle 100 and an object is high, the speed control unit 335 executes the speed control of the vehicle 100 so that the vehicle 100 is accelerated at acceleration lower than the normal acceleration corresponding to the press amount of the accelerator pedal.

It should be noted that, after the deceleration control is released, acceleration of the vehicle 100 is controlled based on a collision possibility between the vehicle 100 and an object, which has been determined in the determination unit 334. On the other hand, when the normal control that is not after the deceleration control is released is executed, the speed control of the vehicle 100 is executed so as to set the same acceleration with respect to a press amount of the accelerator pedal, regardless of a collision possibility between the vehicle 100 and an object, which has been determined in the determination unit 334. Specifically, when the normal control that is not after the deceleration control is released is executed, the speed control of the vehicle 100 is executed so that the vehicle 100 is accelerated at the normal acceleration corresponding to the press amount of the accelerator pedal.

In the present embodiment, when the determination unit 334 determines that a collision possibility is high, the speed control of the vehicle 100 is executed so that acceleration of the vehicle 100 with respect to a press amount of the accelerator pedal is lower as compared to a case where the collision possibility is determined to be low. Therefore, even when a driver presses down the accelerator pedal more than necessary, acceleration of the vehicle 100 is suppressed in a case where a possibility that the vehicle 100 collides with an object located in front of the vehicle is high. As a result, the possibility that the vehicle 100 collides with the object located in front of the vehicle is reduced.

In particular, in the present embodiment, a predetermined operation of the accelerator pedal, specifically, an operation in which the accelerator pedal is pressed down by equal to or more than a predetermined amount or an operation in which the accelerator pedal is pressed down at a press speed equal to or more than a predetermined speed is needed, in order to release the deceleration control. There may be a case where a driver presses down the accelerator pedal more than necessary when the driver performs such an operation, but, even in such a case, a possibility that the vehicle 100 collides with an object located in front of the vehicle can be reduced. Meanwhile, in the present embodiment, when the normal control that is not after the deceleration control is released is executed, the speed control of the vehicle 100 is executed so as to set the same acceleration with respect to a press amount of the accelerator pedal, regardless of a collision possibility between the vehicle 100 and an object. When a predetermined operation of the accelerator pedal for releasing the deceleration control is not performed, a possibility that a driver presses down the accelerator pedal more than necessary by mistake is low, and thus such control is executed during the normal control.

The notification unit 336 provides notification to a passenger of the vehicle 100 by using the information provision device of the HMI 15. In the present embodiment, the notification unit 336 receives an input of information relating to the speed control of the vehicle 100 from the speed control unit 335. Further, the notification unit 336 may receive an input of information relating to the deceleration control of the vehicle 100 from the speed control unit 335.

The notification unit 336 provides notification to a passenger of the vehicle 100, based on the information which was input in the above manner. In the present embodiment, the notification unit 336 provides notification to a passenger by displaying any information on the display 16. In addition, the notification unit 336 provides notification to a passenger by outputting any sound from the speaker 17.

In particular, in the present embodiment, when the vehicle 100 is accelerated at acceleration lower than the normal acceleration corresponding to the press amount of the accelerator pedal, the notification unit 336 provides notification relating to the acceleration to a driver. In this case, specifically, the notification unit 336 displays, on the display 16, the fact that the vehicle 100 is accelerated at the acceleration lower than the normal acceleration. In addition, the notification unit 336 outputs, from the speaker 17, a sound of the fact that the vehicle 100 is accelerated at the acceleration lower than the normal acceleration. As a result, the driver can recognize the reason why the acceleration of the vehicle 100 is low with respect to a press amount of the accelerator pedal.

When the deceleration control is executed, the notification unit 336 may notify a driver of the execution. In this case, specifically, the notification unit 336 displays, on the display 16, the fact that the deceleration control is being executed. In addition, the notification unit 336 outputs, from the speaker 17, a sound of the fact that the deceleration control has started. In addition, when the deceleration control is released, the notification unit 336 may notify a driver of the release. In this case, specifically, the notification unit 336 displays, on the display 16, the fact that the deceleration control is released. In addition, the notification unit 336 outputs, from the speaker 17, a sound of the fact that the deceleration control is released.

It should be noted that, in the present embodiment, the notification unit 336 provides notification to a passenger by using both of the display 16 and the speaker 17. However, the notification unit 336 may provide notification to a passenger by using only one of the display 16 and the speaker 17. Further, the notification unit 336 may provide notification to a passenger by a means other than the display 16 and the speaker 17 by, for example, vibrating the steering wheel 102 or a seat belt (not illustrated), or the like.

### <Flow of Control by Vehicle Control Device>

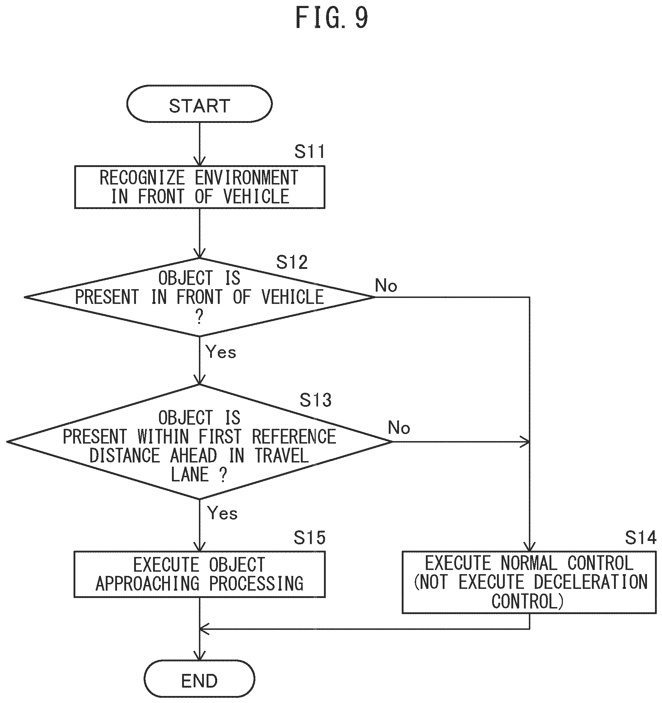

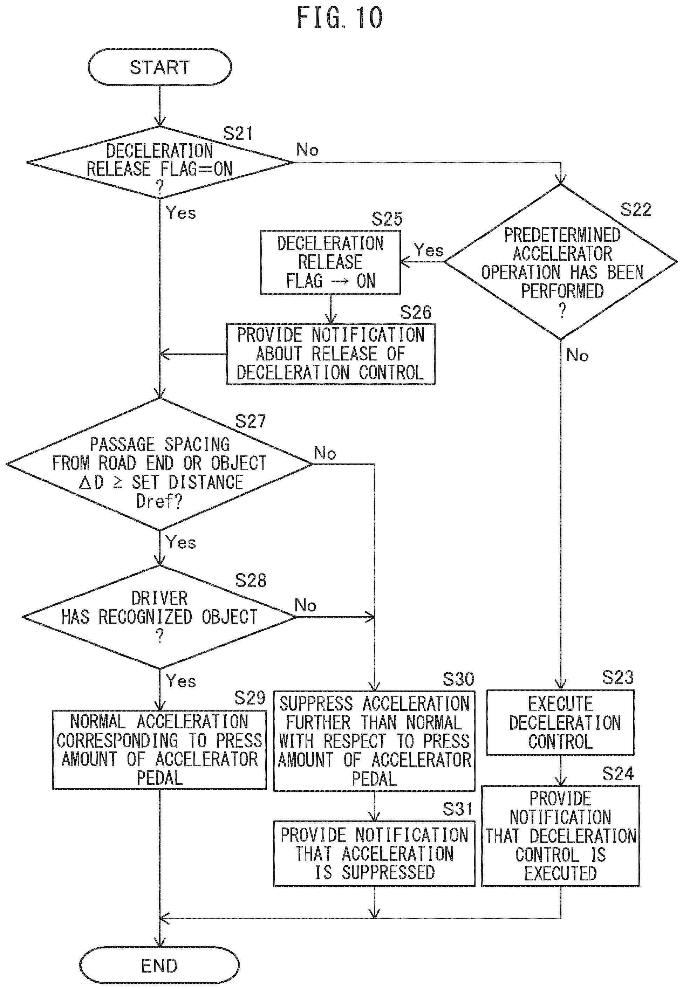

Next, a flow of control by the vehicle control device will be described with reference to FIGS. 9 and 10. FIG. 9 is a flowchart illustrating a flow of decision processing of deciding whether to execute object approaching processing which is executed when an object is present in front of the vehicle 100. The illustrated decision processing is executed for each fixed time interval by the processor 33 of the ECU 30.

As illustrated in FIG. 9, when the decision processing starts, the environment recognition unit 331 recognizes an environment in front of the vehicle 100, based on an output of the vehicle exterior camera 12 and an output of the distance measuring sensor 13 (step S11). In particular, the environment recognition unit 331 recognizes an object located in front of the vehicle 100, and also recognizes a relative position and a relative speed of the object with respect to the vehicle 100. In addition, the environment recognition unit 331 recognizes a road on which the vehicle 100 travels and a pavement marking.

Next, the deceleration unit 332 determines whether a deceleration condition is satisfied. Specifically, the deceleration unit 332 determines whether an object is present in front of the vehicle 100, based on the environment in front of the vehicle 100 which has been recognized by the environment recognition unit 331 (step S12). In addition, in the present embodiment, the deceleration unit 332 determines whether an object other than a preceding vehicle is present within a predetermined first reference distance in front of the vehicle 100 in a lane in which the vehicle 100 travels, based on the environment in front of the vehicle 100 which has been recognized by the environment recognition unit 331 (step S13).

When it is determined in step S12 that an object is not present in front of the vehicle, or when it is determined in step S13 that an object other than a preceding vehicle is not present within the first reference distance in front of the vehicle 100 in the lane in which the vehicle 100 travels, the deceleration unit 332 does not execute the deceleration control. Therefore, in this case, the normal control is executed (step S14). On the other hand, when it is determined in step S12 that an object is present in front of the vehicle and it is determined in step S13 that an object other than a preceding vehicle is present within the first reference distance in front of the vehicle 100 in the lane in which the vehicle 100 travels, the object approaching processing described below is executed (step S15).

FIG. 10 is a flowchart illustrating a flow of the object approaching processing which is executed when an object is present in front of the vehicle 100. The object approaching processing illustrated in FIG. 10 is executed for each fixed time interval by the processor 33 of the ECU 30.

First, the speed control unit 335 determines whether a deceleration release flag, which is set to ON when the deceleration control is released, is set to ON (step S21). The deceleration release flag is set to OFF when the object approaching processing is started. When it is determined in step S21 that the deceleration release flag is not set to ON, the speed control unit 335 determines whether a predetermined operation of an accelerator pedal (accelerator override) has been performed (step S22). In the present embodiment, specifically, the speed control unit 335 determines whether the accelerator pedal has been pressed down by equal to or more than a predetermined reference press amount, or whether the accelerator pedal has been pressed down at a speed equal to or more than a reference press speed.

When it is determined in step S22 that the predetermined operation of the accelerator pedal has not been performed, the deceleration unit 332 executes the deceleration control (step S23). Therefore, the deceleration unit 332 controls the vehicle actuator 21 in order to decelerate a speed of the vehicle 100 to a reduction reference speed. Next, the notification unit 336 provides notification that the deceleration control is executed (step S24).

On the other hand, when it is determined in step S22 that the predetermined operation of the accelerator pedal has been performed, the speed control unit 335 sets the deceleration release flag to ON (step S25). Next, the notification unit 336 provides notification that the deceleration control is released (step S26).

When it is determined in step S21 that the deceleration release flag is set to ON, or when it is determined in step S22 that the predetermined operation of the accelerator pedal has been performed and then the operations in steps S25 and S26 are performed, the determination unit 334 determines whether a spacing ΔD that may be provided between the vehicle 100 and an object (passage spacing) or the spacing ΔD that may be provided between the vehicle 100 and an end of a possible travel range (passage spacing) is equal to or more than a reference spacing Dref (step S27). In addition, the speed control unit 335 determines whether a driver has recognized the object in front of the vehicle 100 (step S28).

When it is determined in step S27 that the passage spacing ΔD is equal to or more than the reference spacing Dref and it is determined in step S28 that the driver has recognized the object, the speed control unit 335 executes the speed control of the vehicle 100 so that the vehicle 100 is accelerated at normal acceleration corresponding to a press amount of the accelerator pedal (step S29). On the other hand, when it is determined in step S27 that the passage spacing ΔD is less than the reference spacing Dref, or when it is determined in step S28 that the driver has not recognized the object, the speed control unit 335 executes the speed control of the vehicle 100 so that the vehicle 100 is accelerated at acceleration lower than the normal acceleration corresponding to the press amount of the accelerator pedal (step S30). Subsequently, the notification unit 336 provides notification that the vehicle 100 is accelerated at the acceleration lower than the normal acceleration corresponding to the press amount of the accelerator pedal (step S31).

It should be noted that the deceleration release flag is set to OFF when execution of the object approaching processing is stopped and the normal control is executed in the decision processing in FIG. 9.

### <Modification >

Next, a modification of the embodiment described above will be described.

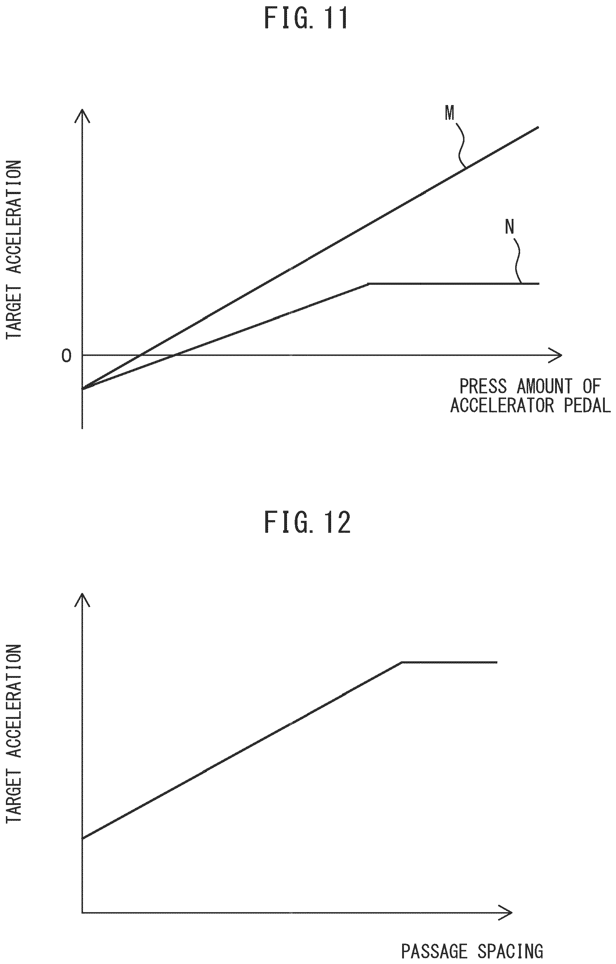

In one modification, the speed control unit 335 executes the speed control in a way different from the embodiment described above. FIG. 11 is a diagram similar to FIG. 8, illustrating a relationship between the press amount of the accelerator pedal and the target acceleration of the vehicle 100. M in FIG. 11 indicates a relationship when the determination unit 334 determines that a collision possibility is low, and N in FIG. 11 indicates a relationship when the determination unit 334 determines that the collision possibility is high.

As illustrated in FIG. 11, in the present modification, when the determination unit 334 determines that the collision possibility is high, the target acceleration is set higher as the press amount of the accelerator pedal is larger, in a case where the press amount of the accelerator pedal is less than a fixed press amount. In contrast, when the press amount of the accelerator pedal is equal to or more than the fixed press amount, the target acceleration is maintained at fixed acceleration, regardless of the press amount of the accelerator pedal. As a result, when a collision possibility with an object in front of the vehicle 100 is high, the vehicle 100 being accelerated more than necessary is suppressed.

In a different modification, the determination unit 334 outputs a determination result of a collision possibility between the vehicle 100 and an object in a way different from the embodiment described above. In addition, the speed control unit 335 executes the speed control in a way different from the embodiment described above.

In the embodiment described above, the determination unit 334 outputs a determination result of a collision possibility between the vehicle 100 and an object in two levels, i.e., a determination result that the collision possibility is high and a determination result that the collision possibility is low. In contrast, in the present modification, the determination unit 334 outputs a determination result of a collision possibility in many levels equal to or more than three levels or continuously according to a passage spacing. Specifically, the collision possibility with an object is determined to be higher as the passage spacing is smaller. Further, the determination unit 334 may output a determination result of the collision possibility in many levels equal to or more than three levels or continuously, according to a kind or a situation of an object in front of the vehicle 100 in addition to the passage spacing.

Then, the speed control unit 335 sets target acceleration according to the passage spacing. FIG. 12 is a diagram illustrating a relationship between the passage spacing and the target acceleration of the vehicle 100 when the press amount of the accelerator pedal is fixed. As illustrated in FIG. 12, the target acceleration of the vehicle 100 is set lower as the passage spacing is smaller. Therefore, in the present modification, the speed control unit 335 executes the speed control of the vehicle 100 so that acceleration of the vehicle 100 with respect to the press amount of the accelerator pedal is set lower as the passage spacing is smaller. As a result, when the vehicle 100 passes through a side of an object such as a pedestrian, a speed of the vehicle 100 is slower as the object is closer. Thus, while a possibility that the vehicle 100 collides with the object is reduced, limitation of acceleration of the vehicle 100 more than necessary is suppressed.

In the embodiment described above, a collision possibility between the vehicle 100 and an object is determined based on a passage spacing and presence of recognition of the object by a driver. However, in one modification, a possibility that the vehicle 100 and an object collide with each other may be determined based on only a passage spacing. Alternatively, a possibility that the vehicle 100 and an object collide with each other may be determined based on only presence of recognition of the object by a driver.

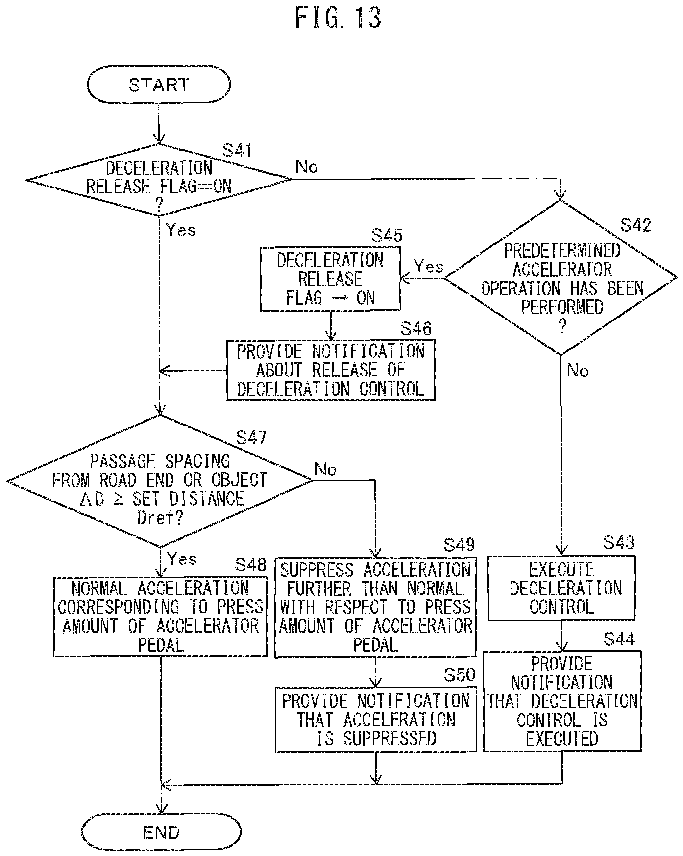

FIG. 13 is a flowchart similar to FIG. 10, illustrating a flow of the object approaching processing when a possibility that the vehicle 100 and an object collide with each other is determined based on only a passage spacing. Steps S41 to S50 in FIG. 13 correspond to steps S21 to S27 and S29 to S31 in FIG. 10, respectively. As understood from FIG. 13, in the object approaching processing in the present modification, step S28 in the object approaching processing illustrated in FIG. 10 is omitted. As a result, when it is determined in step S47 that the passage spacing ΔD is equal to or more than the reference spacing Dref, the speed control unit 335 executes the speed control of the vehicle 100 so that the vehicle 100 is accelerated at the normal acceleration corresponding to the press amount of the accelerator pedal (step S48). On the other hand, when it is determined in step S47 that the passage spacing ΔD is less than the reference spacing Dref, the speed control unit 335 executes the speed control of the vehicle 100 so that the vehicle 100 is accelerated at acceleration lower than the normal acceleration corresponding to the press amount of the accelerator pedal (step S49).

While the suitable embodiments according to the present disclosure have been described, the present disclosure is not limited to these embodiments, and various modifications and changes can be made within the scope of the claims.

## Claims

1. A vehicle control device for controlling a speed of a vehicle (100) during traveling, the vehicle control device comprising:
a deceleration unit (332) configured to execute deceleration control for decelerating the vehicle (100) when a predetermined deceleration condition is satisfied;
a speed control unit (335) configured to execute speed control of the vehicle (100) according to an operation of an accelerator pedal by releasing the deceleration control when a predetermined operation of the accelerator pedal is detected during execution of the deceleration control; and
a determination unit (334) configured to determine a possibility that the vehicle (100) and an object collide with each other when the object is detected in front of the vehicle (100), **characterized in that**
the speed control unit (335) is configured to, when a collision possibility between the vehicle (100) and the object is determined to be high, execute the speed control of the vehicle (100) so that acceleration of the vehicle (100) with respect to a press amount of the accelerator pedal is lower as compared to a case where the collision possibility is determined to be low.

2. The vehicle control device according to claim 1, wherein
the determination unit (334) is configured to determine a collision possibility between the vehicle (100) and the object, based on a spacing that may be provided between the vehicle (100) and the object at a time at which the vehicle (100) passes at a side of the object within a possible travel range on a road.

3. The vehicle control device according to claim 2, wherein
the possible travel range is within a range in a width direction of a lane in which the vehicle (100) travels.

4. The vehicle control device according to claim 2, wherein
the possible travel range is within a range in a width direction of a road on which the vehicle (100) travels.

5. The vehicle control device according to any one of claims 2 to 4, wherein
the speed control unit (335) is configured to execute the speed control of the vehicle (100) so that acceleration of the vehicle (100) with respect to a press amount of the accelerator pedal is lower as a spacing that may be provided between the vehicle (100) and the object is smaller at a time at which the vehicle (100) passes at a side of the object within a possible travel range on a road.

6. The vehicle control device according to any one of claims 2 to 5, wherein
the determination unit (334) is configured to determine a collision possibility between the vehicle (100) and the object, based on a kind or a situation of the object in addition to a spacing that may be provided between the vehicle (100) and the object at a time at which the vehicle (100) passes at a side of the object within a possible travel range on a road.

7. The vehicle control device according to any one of claims 1 to 6, wherein
the determination unit (334) is configured to determine a collision possibility between the vehicle (100) and the object, based on whether a driver of the vehicle (100) has recognized the object.

8. The vehicle control device according to any one of claims 2 to 6, wherein
the determination unit (334) is configured to determine a collision possibility between the vehicle (100) and the object, based on whether a driver of the vehicle (100) has recognized the object, and, when the driver of the vehicle (100) has not recognized the object, the determination unit (334) is configured to determine that the collision possibility between the vehicle (100) and the object is high, regardless of a spacing that may be provided between the vehicle (100) and the object at a time at which the vehicle (100) passes at a side of the object within a possible travel range on a road.

9. The vehicle control device according to any one of claims 1 to 8, wherein
the speed control unit (335) is configured to execute the speed control of the vehicle (100) so that the vehicle (100) is accelerated at normal acceleration corresponding to a press amount of the accelerator pedal when a collision possibility between the vehicle (100) and the object is determined to be low, and so that the vehicle (100) is accelerated at acceleration lower than the normal acceleration corresponding to the press amount of the accelerator pedal when the collision possibility between the vehicle (100) and the object is determined to be high.

10. The vehicle control device according to claim 9, further comprising
a notification unit (336) configured to provide notification to a driver that the vehicle (100) is accelerated at acceleration lower than the normal acceleration corresponding to the press amount of the accelerator pedal when the vehicle (100) is accelerated at the acceleration.

11. The vehicle control device according to any one of claims 1 to 10, wherein,
in a case where a collision possibility between the vehicle (100) and the object is determined to be high, when a press amount of the accelerator pedal is equal to or more than a fixed amount, the speed control unit (335) is configured to execute the speed control of the vehicle (100) so that acceleration of the vehicle (100) becomes fixed acceleration, regardless of the press amount.

12. The vehicle control device according to any one of claims 1 to 11, wherein
a predetermined operation of the accelerator pedal for releasing the deceleration control is an operation in which the accelerator pedal is pressed down by equal to or more than a predetermined amount after execution of the deceleration control starts, or an operation in which the accelerator pedal is pressed down at a press speed equal to or more than a predetermined speed.

13. The vehicle control device according to any one of claims 1 to 12, wherein,
when normal control that is not after the deceleration control is released is executed, the speed control unit (335) is configured to execute the speed control of the vehicle (100) so as to become the same acceleration with respect to a press amount of the accelerator pedal, regardless of a collision possibility between the vehicle (100) and the object.

14. A vehicle control method for controlling a speed of a vehicle (100) during traveling, the vehicle control method comprising:
executing deceleration control for decelerating the vehicle (100) when a predetermined deceleration condition is satisfied;
executing speed control of the vehicle (100) according to an operation of an accelerator pedal by releasing the deceleration control when a predetermined operation of the accelerator pedal is detected during execution of the deceleration control; and
determining a possibility that the vehicle (100) and an object collide with each other when the object is detected in front of the vehicle (100), **characterized in that**
when a collision possibility between the vehicle (100) and the object is determined to be high, the speed control of the vehicle (100) is executed so that acceleration of the vehicle (100) with respect to a press amount of the accelerator pedal is lower as compared to a case where the collision possibility is determined to be low.

15. A vehicle control program that controls a speed of a vehicle (100) during traveling, the vehicle control program causing a computer to execute:
executing deceleration control for decelerating the vehicle (100) when a predetermined deceleration condition is satisfied;
executing speed control of the vehicle (100) according to an operation of an accelerator pedal by releasing the deceleration control when a predetermined operation of the accelerator pedal is detected during execution of the deceleration control; and
determining a possibility that the vehicle (100) and an object collide with each other when the object is detected in front of the vehicle (100), **characterized in that**
when a collision possibility between the vehicle (100) and the object is determined to be high, the speed control of the vehicle (100) is executed so that acceleration of the vehicle (100) with respect to a press amount of the accelerator pedal is lower as compared to a case where the collision possibility is determined to be low.

## Patentansprüche

1. Fahrzeugsteuervorrichtung zum Steuern einer Geschwindigkeit eines Fahrzeugs (100) während des Fahrens, wobei die Fahrzeugsteuervorrichtung Folgendes umfasst:
eine Verzögerungseinheit (332), die dazu ausgelegt ist, eine Verzögerungssteuerung zum Verzögern des Fahrzeugs (100) auszuführen, wenn eine vorbestimmte Verzögerungsbedingung erfüllt ist;
eine Geschwindigkeitssteuereinheit (335), die dazu ausgelegt ist, durch Freigeben der Verzögerungssteuerung eine Geschwindigkeitssteuerung des Fahrzeugs (100) gemäß einer Betätigung eines Gaspedals auszuführen, wenn während der Ausführung der Verzögerungssteuerung eine vorbestimmte Betätigung des Gaspedals detektiert wird; und
eine Bestimmungseinheit (334), die dazu ausgelegt ist, eine Möglichkeit zu bestimmen, dass das Fahrzeug (100) und ein Objekt miteinander kollidieren, wenn das Objekt vor dem Fahrzeug (100) detektiert wird, **dadurch gekennzeichnet, dass**
die Geschwindigkeitssteuereinheit (335) dazu ausgelegt ist, die Geschwindigkeitssteuerung des Fahrzeugs (100) derart auszuführen, dass, verglichen mit einem Fall, in dem die Kollisionsmöglichkeit als niedrig bestimmt wird, eine Beschleunigung des Fahrzeugs (100) mit Bezug auf eine Druckmenge des Gaspedals niedriger ist wenn bestimmt wird, dass eine Kollisionsmöglichkeit zwischen dem Fahrzeug (100) und dem Objekt hoch ist.

2. Fahrzeugsteuervorrichtung nach Anspruch 1, wobei
die Bestimmungseinheit (334) dazu ausgelegt ist, eine Kollisionsmöglichkeit zwischen dem Fahrzeug (100) und dem Objekt auf Basis eines Abstands zu bestimmen, der zwischen dem Fahrzeug (100) und dem Objekt zu einer Zeit bereitgestellt sein kann, zu der das Fahrzeug (100) das Objekt innerhalb eines möglichen Fahrbereichs auf einer Straße auf einer Seite passiert.

3. Fahrzeugsteuervorrichtung nach Anspruch 2, wobei
der mögliche Fahrbereich innerhalb eines Bereichs in einer Breitenrichtung einer Fahrspur liegt, auf der das Fahrzeug (100) fährt.

4. Fahrzeugsteuervorrichtung nach Anspruch 2, wobei
der mögliche Fahrbereich innerhalb eines Bereichs in einer Breitenrichtung einer Straße liegt, auf der das Fahrzeug (100) fährt.

5. Fahrzeugsteuervorrichtung nach einem der Ansprüche 2 bis 4, wobei
die Geschwindigkeitssteuereinheit (335) dazu ausgelegt ist, die Geschwindigkeitssteuerung des Fahrzeugs (100) derart auszuführen, dass mit Bezug auf eine Druckmenge des Gaspedals eine Beschleunigung des Fahrzeugs (100) niedriger ist als ein Abstand, der zu einer Zeit zwischen dem Fahrzeug (100) und dem Objekt bereitgestellt sein kann, zu der das Fahrzeug (100) das Objekt innerhalb eines möglichen Fahrbereichs auf einer Straße auf einer Seite passiert, kleiner ist.

6. Fahrzeugsteuervorrichtung nach einem der Ansprüche 2 bis 5, wobei
die Bestimmungseinheit (334) dazu ausgelegt ist, eine Kollisionsmöglichkeit zwischen dem Fahrzeug (100) und dem Objekt auf Basis einer Art oder einer Situation des Objekts zusätzlich zu einem Abstand zu bestimmen, der zwischen dem Fahrzeug (100) und dem Objekt zu einer Zeit bereitgestellt sein kann, zu der das Fahrzeug (100) das Objekt innerhalb eines möglichen Fahrbereichs auf einer Straße auf einer Seite passiert.

7. Fahrzeugsteuervorrichtung nach einem der Ansprüche 1 bis 6, wobei
die Bestimmungseinheit (334) dazu ausgelegt ist, eine Kollisionsmöglichkeit zwischen dem Fahrzeug (100) und dem Objekt darauf basierend zu bestimmen, ob ein Fahrer des Fahrzeugs (100) das Objekt erkannt hat.

8. Fahrzeugsteuervorrichtung nach einem der Ansprüche 2 bis 6, wobei
die Bestimmungseinheit (334) dazu ausgelegt ist, eine Kollisionsmöglichkeit zwischen dem Fahrzeug (100) und dem Objekt darauf basierend zu bestimmen, ob ein Fahrer des Fahrzeugs (100) das Objekt erkannt hat, und, wenn der Fahrer des Fahrzeugs (100) das Objekt nicht erkannt hat, die Bestimmungseinheit (334) dazu ausgelegt ist zu bestimmen, dass die Kollisionsmöglichkeit zwischen dem Fahrzeug (100) und dem Objekt hoch ist, unabhängig von einem Abstand, der zu einer Zeit zwischen dem Fahrzeug (100) und dem Objekt bereitgestellt sein kann, zu der das Fahrzeug (100) innerhalb eines möglichen Fahrbereichs auf einer Straße das Objekt auf einer Seite passiert.

9. Fahrzeugsteuervorrichtung nach einem der Ansprüche 1 bis 8, wobei
die Geschwindigkeitssteuereinheit (335) dazu ausgelegt ist, die Geschwindigkeitssteuerung des Fahrzeugs (100) derart auszuführen, dass das Fahrzeug (100) mit einer normalen Beschleunigung beschleunigt wird, die einer Druckmenge des Gaspedals entspricht, wenn bestimmt wird, dass eine Kollisionsmöglichkeit zwischen dem Fahrzeug (100) und dem Objekt niedrig ist, und derart, dass das Fahrzeug (100) mit einer Beschleunigung beschleunigt wird, die niedriger ist als die normale Beschleunigung, die der Druckmenge des Gaspedals entspricht, wenn bestimmt wird, dass die Kollisionsmöglichkeit zwischen dem Fahrzeug (100) und dem Objekt hoch ist.

10. Fahrzeugsteuervorrichtung nach Anspruch 9, die ferner Folgendes umfasst
eine Benachrichtigungseinheit (336), die dazu ausgelegt ist, einem Fahrer eine Benachrichtigung bereitzustellen, dass das Fahrzeug (100) mit einer niedrigeren Beschleunigung beschleunigt wird als die normale Beschleunigung, die der Druckmenge des Gaspedals entspricht, wenn das Fahrzeug (100) mit der Beschleunigung beschleunigt wird.

11. Fahrzeugsteuervorrichtung nach einem der Ansprüche 1 bis 10, wobei,
in einem Fall, in dem bestimmt wird, dass eine Kollisionsmöglichkeit zwischen dem Fahrzeug (100) und dem Objekt hoch ist, wenn eine Druckmenge des Gaspedals gleich oder größer ist als eine feste Menge, die Geschwindigkeitssteuereinheit (335) dazu ausgelegt ist, die Geschwindigkeitssteuerung des Fahrzeugs (100) derart auszuführen, dass eine Beschleunigung des Fahrzeugs (100) unabhängig von der Druckmenge zu einer festen Beschleunigung wird.

12. Fahrzeugsteuervorrichtung nach einem der Ansprüche 1 bis 11, wobei
eine vorbestimmte Betätigung des Gaspedals zum Freigeben der Verzögerungssteuerung eine Betätigung ist, bei der das Gaspedal um eine gleiche oder eine größere Menge als eine vorbestimmte Menge heruntergedrückt wird, nachdem die Ausführung der Verzögerungssteuerung gestartet wurde, oder eine Betätigung, bei der das Gaspedal mit einer Druckgeschwindigkeit heruntergedrückt wird, die gleich oder größer ist als eine vorbestimmte Geschwindigkeit.

13. Fahrzeugsteuervorrichtung nach einem der Ansprüche 1 bis 12, wobei,
wenn eine normale Steuerung ausgeführt wird, die nicht erfolgt, nachdem die Verzögerungssteuerung freigegeben wurde, die Geschwindigkeitssteuereinheit (335) dazu ausgelegt ist, die Geschwindigkeitssteuerung des Fahrzeugs (100) derart auszuführen, dass sie mit Bezug auf eine Druckmenge des Gaspedals unabhängig von einer Kollisionsmöglichkeit zwischen dem Fahrzeug (100) und dem Objekt zu einer selben Beschleunigung wird.

14. Fahrzeugsteuerverfahren zum Steuern einer Geschwindigkeit eines Fahrzeugs (100) während des Fahrens, wobei das Fahrzeugsteuerverfahren Folgendes umfasst:
Ausführen einer Verzögerungssteuerung zum Verzögern des Fahrzeugs (100), wenn eine vorbestimmte Verzögerungsbedingung erfüllt ist;
Ausführen einer Geschwindigkeitssteuerung des Fahrzeugs (100) gemäß einer Betätigung eines Gaspedals durch Freigeben der Verzögerungssteuerung, wenn eine vorbestimmte Betätigung des Gaspedals während der Ausführung der Verzögerungssteuerung detektiert wird; und
Bestimmen einer Möglichkeit, dass das Fahrzeug (100) und ein Objekt miteinander kollidieren, wenn das Objekt vor dem Fahrzeug (100) detektiert wird, **dadurch gekennzeichnet, dass**
wenn bestimmt wird, dass eine Kollisionsmöglichkeit zwischen dem Fahrzeug (100) und dem Objekt hoch ist, die Geschwindigkeitssteuerung des Fahrzeugs (100) derart ausgeführt wird, dass, verglichen mit einem Fall, in dem die Kollisionsmöglichkeit als niedrig bestimmt wird, eine Beschleunigung des Fahrzeugs (100) mit Bezug auf eine Druckmenge des Gaspedals niedriger ist.

15. Fahrzeugsteuerprogramm, dass eine Geschwindigkeit eines Fahrzeugs (100) während des Fahrens steuert, wobei das Fahrzeugsteuerprogramm einen Computer veranlasst, Folgendes auszuführen:
Ausführen einer Verzögerungssteuerung zum Verzögern des Fahrzeugs (100), wenn eine vorbestimmte Verzögerungsbedingung erfüllt ist;
Ausführen einer Geschwindigkeitssteuerung des Fahrzeugs (100) gemäß einer Betätigung eines Gaspedals durch Freigeben der Verzögerungssteuerung, wenn eine vorbestimmte Betätigung des Gaspedals während der Ausführung der Verzögerungssteuerung detektiert wird; und
Bestimmen einer Möglichkeit, dass das Fahrzeug (100) und ein Objekt miteinander kollidieren, wenn das Objekt vor dem Fahrzeug (100) detektiert wird, **dadurch gekennzeichnet, dass**
wenn bestimmt wird, dass eine Kollisionsmöglichkeit zwischen dem Fahrzeug (100) und dem Objekt hoch ist, die Geschwindigkeitssteuerung des Fahrzeugs (100) derart ausgeführt wird, dass, verglichen mit einem Fall, in dem die Kollisionsmöglichkeit als niedrig bestimmt wird, eine Beschleunigung des Fahrzeugs (100) mit Bezug auf eine Druckmenge des Gaspedals niedriger ist.

## Revendications

1. Dispositif de commande de véhicule pour commander une vitesse d'un véhicule (100) pendant un déplacement, le dispositif de commande de véhicule comprenant :
une unité de décélération (332) configurée pour exécuter une commande de décélération pour ralentir le véhicule (100) lorsqu'une condition de décélération prédéterminée est satisfaite ;
une unité de commande de vitesse (335) configurée pour exécuter une commande de vitesse du véhicule (100) selon un actionnement d'une pédale d'accélérateur, en relâchant la commande de décélération lorsqu'un actionnement prédéterminé de la pédale d'accélérateur est détecté pendant l'exécution de la commande de décélération ; et
une unité de détermination (334) configurée pour déterminer une possibilité que le véhicule (100) et un objet entrent en collision l'un avec l'autre lorsque l'objet est détecté devant le véhicule (100), **caractérisé en ce que**
l'unité de commande de vitesse (335) est configurée pour, à la détermination d'une forte possibilité de collision entre le véhicule (100) et l'objet, exécuter la commande de vitesse du véhicule (100) de sorte que l'accélération du véhicule (100) par rapport à une quantité de pression de la pédale d'accélérateur soit moindre que dans le cas où une faible possibilité de collision a été déterminée.

2. Dispositif de commande de véhicule selon la revendication 1, dans lequel
l'unité de détermination (334) est configurée pour déterminer une possibilité de collision entre le véhicule (100) et l'objet sur la base d'un espacement pouvant se trouver entre le véhicule (100) et l'objet à un moment où le véhicule (100) passe d'un côté de l'objet dans une plage de déplacement possible sur une route.

3. Dispositif de commande de véhicule selon la revendication 2, dans lequel
la plage de déplacement possible se situe dans une plage dans le sens de la largeur d'une voie dans laquelle le véhicule (100) se déplace.

4. Dispositif de commande de véhicule selon la revendication 2, dans lequel
la plage de déplacement possible se situe dans une plage dans le sens de la largeur d'une route sur laquelle le véhicule (100) se déplace.

5. Dispositif de commande de véhicule selon l'une des revendications 2 à 4, dans lequel
l'unité de commande de vitesse (335) est configurée pour exécuter la commande de vitesse du véhicule (100) de sorte que l'accélération du véhicule (100) par rapport à une quantité de pression de la pédale d'accélérateur soit moindre à mesure qu'un espacement pouvant se trouver entre le véhicule (100) et l'objet diminue à un moment où le véhicule (100) passe d'un côté de l'objet dans une plage de déplacement possible sur une route.

6. Dispositif de commande de véhicule selon l'une des revendications 2 à 5, dans lequel
l'unité de détermination (334) est configurée pour déterminer une possibilité de collision entre le véhicule (100) et l'objet sur la base d'un type d'objet ou d'une situation de l'objet en plus d'un espacement pouvant se trouver entre le véhicule (100) et l'objet à un moment où le véhicule (100) passe d'un côté de l'objet dans une plage de déplacement possible sur une route.

7. Dispositif de commande de véhicule selon l'une des revendications 1 à 6, dans lequel
l'unité de détermination (334) est configurée pour déterminer une possibilité de collision entre le véhicule (100) et l'objet selon qu'un conducteur du véhicule (100) a ou non reconnu l'objet.

8. Dispositif de commande de véhicule selon l'une des revendications 2 à 6, dans lequel
l'unité de détermination (334) est configurée pour déterminer une possibilité de collision entre le véhicule (100) et l'objet selon qu'un conducteur du véhicule (100) a ou non reconnu l'objet, et si le conducteur du véhicule (100) n'a pas reconnu l'objet, l'unité de détermination (334) est configurée pour déterminer une forte possibilité de collision entre le véhicule (100) et l'objet, indépendamment d'un espacement pouvant se trouver entre le véhicule (100) et l'objet à un moment où le véhicule (100) passe d'un côté de l'objet dans une plage de déplacement possible sur une route.

9. Dispositif de commande de véhicule selon l'une des revendications 1 à 8, dans lequel
l'unité de commande de vitesse (335) est configurée pour exécuter la commande de vitesse du véhicule (100) de sorte que le véhicule (100) accélère à une accélération normale correspondant à une quantité de pression de la pédale d'accélérateur à la détermination d'une faible possibilité de collision entre le véhicule (100) et l'objet, et de sorte que le véhicule (100) accélère à une accélération inférieure à l'accélération normale correspondant à la quantité de pression de la pédale d'accélérateur à la détermination d'une forte possibilité de collision entre le véhicule (100) et l'objet.

10. Dispositif de commande de véhicule selon la revendication 9, comprenant en outre
une unité de notification (336) configurée pour fournir une notification à un conducteur précisant que le véhicule (100) accélère à une accélération inférieure à l'accélération normale correspondant à la quantité de pression de la pédale d'accélérateur lorsque le véhicule (100) accélère à cette accélération.

11. Dispositif de commande de véhicule selon l'une des revendications 1 à 10, dans lequel,
dans le cas où une forte possibilité de collision entre le véhicule (100) et l'objet est déterminée lorsqu'une quantité de pression de la pédale d'accélérateur est égale ou supérieure à une quantité fixe, l'unité de commande de vitesse (335) est configurée pour exécuter la commande de vitesse du véhicule (100) de sorte que l'accélération du véhicule (100) devienne une accélération fixe indépendamment de la quantité de pression.

12. Dispositif de commande de véhicule selon l'une des revendications 1 à 11,
dans lequel un actionnement prédéterminé de la pédale d'accélérateur pour relâcher la commande de décélération est un actionnement par lequel la pédale d'accélérateur est enfoncée d'une quantité égale ou supérieure à une quantité après le début de l'exécution de la commande de décélération, ou un actionnement par lequel la pédale d'accélérateur est enfoncée à une vitesse de pression égale ou supérieure à une vitesse prédéterminée.

13. Dispositif de commande de véhicule selon l'une des revendications 1 à 12, dans lequel,
lorsqu'une commande normale non postérieure au relâchement de la commande de décélération est exécutée, l'unité de commande de vitesse (335) est configurée pour exécuter la commande de vitesse du véhicule (100) de manière à arriver à la même accélération par rapport à une quantité de pression de la pédale d'accélérateur, indépendamment d'une possibilité de collision entre le véhicule (100) et l'objet.

14. Procédé de commande de véhicule pour commander une vitesse d'un véhicule (100) pendant un déplacement, le procédé de commande de véhicule comprenant :
l'exécution d'une commande de décélération pour ralentir le véhicule (100) lorsqu'une condition de décélération prédéterminée est satisfaite ;
l'exécution d'une commande de vitesse du véhicule (100) selon un actionnement d'une pédale d'accélérateur, en relâchant la commande de décélération lorsqu'un actionnement prédéterminé de la pédale d'accélérateur est détecté pendant l'exécution de la commande de décélération ; et
la détermination d'une possibilité que le véhicule (100) et un objet entrent en collision l'un avec l'autre lorsque l'objet est détecté devant le véhicule (100), **caractérisé en ce que**
à la détermination d'une forte possibilité de collision entre le véhicule (100) et l'objet, la commande de vitesse du véhicule (100) est exécutée de sorte que l'accélération du véhicule (100) par rapport à une quantité de pression de la pédale d'accélérateur soit moindre que dans le cas où une faible possibilité de collision a été déterminée.

15. Programme de commande de véhicule qui commande une vitesse d'un véhicule (100) pendant un déplacement, le programme de commande de véhicule amenant un ordinateur à :
exécuter une commande de décélération pour ralentir le véhicule (100) lorsqu'une condition de décélération prédéterminée est satisfaite ;
exécuter une commande de vitesse du véhicule (100) selon un actionnement d'une pédale d'accélérateur, en relâchant la commande de décélération lorsqu'un actionnement prédéterminé de la pédale d'accélérateur est détecté pendant l'exécution de la commande de décélération ; et
déterminer une possibilité que le véhicule (100) et un objet entrent en collision l'un avec l'autre lorsque l'objet est détecté devant le véhicule (100), **caractérisé en ce que**
à la détermination d'une forte possibilité de collision entre le véhicule (100) et l'objet, la commande de vitesse du véhicule (100) est exécutée de sorte que l'accélération du véhicule (100) par rapport à une quantité de pression de la pédale d'accélérateur soit moindre que dans le cas où une faible possibilité de collision a été déterminée.
